# EUROPEAN PATENT SPECIFICATION

(11) **EP 3 309 857 B1**
(45) Date of publication and mention of the grant of the patent: **27.02.2019**
(21) Application number: 17196085.9
(22) Date of filing: 12.10.2017
(51) Int. Cl.: H01M 2/02, H01M 2/16, H01M 2/18, H01M 10/04

(54) **BATTERY STRUCTURE**
BATTERIESTRUKTUR
STRUCTURE DE BATTERIE

(30) Priority: 13.10.2016 TW 105133019
(43) Date of publication of application: 18.04.2018
(73) Proprietor: Prologium Technology Co., Ltd., Taoyuan City 320 (TW); Prologium Holding Inc., Grand Cayman, KY1-1104 (KY)
(72) Inventor: YANG, Szu-Nan, Taoyuan City 320 (TW)
(74) Representative: Cabinet Chaillot

(56) References cited:
- EP-A2- 2 560 224
- US-A1- 2014 377 624
- US-A1- 2015 004 461

## Description

### BACKGROUND

### 1. Technical Field

The present invention relates to a battery structure, particularly to a battery having a structure of protection and isolation.

### 2. Description of Related Art

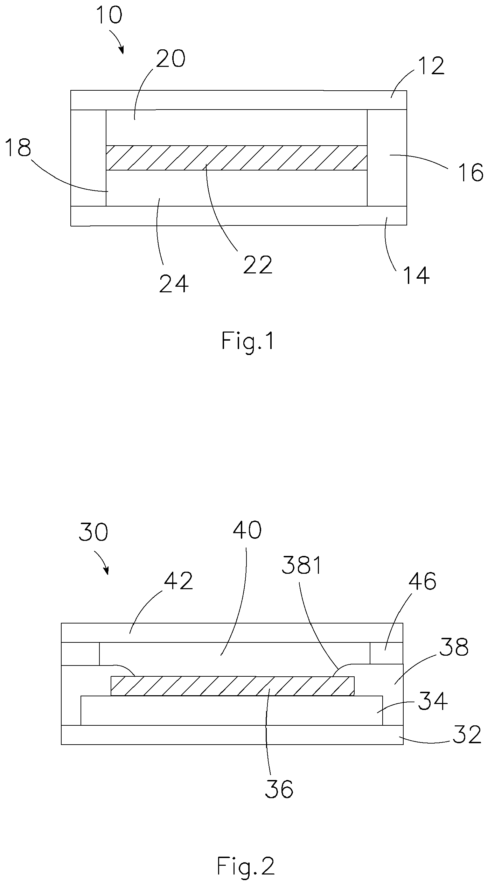

Wearable electronic devices are becoming increasing popular. For the purpose of lighter and thinner, to divide the space of electronic devices becomes an important topic. However, flexible battery provides a solution to the topic. Please refer to figure 1, figure 1 shows a section view of conventional flexible lithium battery. As the figure shows, the flexible lithium battery comprises a top current collector 12, a bottom current collector 14, an outer package 16 interposed between the top current collector 12 and the bottom current collector 14 so that an enclosed space 18 is form. The enclosed space 18 comprises in the order of a first active material layer 20, a spacer layer 22 and a second active material layer 24. The first active material layer 20, the spacer layer 22 and the second active material layer 24 form an electric chemical system layer, and the first active material layer 20 is contact to the top current collector 12, the second active material layer 24 is contact to the bottom current collector 14. The feature of the flexible lithium battery is that the whole battery can dynamic flex.

Furthermore, on the structural design of lithium battery, the horizontal area of the positive active material layer is smaller than the horizontal area of the negative active material layer because if the anode accepts excessive lithium ion from the cathode, the extra lithium ion would deposit and form lithium dendrite and even cause inner short. However, the conventional protective solutions only rely on keeping close tabs on the horizontal area of the positive active material layer and the negative active material layer via process.

Accordingly, a battery structure is provided to overcome the above problems.

### SUMMARY OF THE INVENTION

It is an objection of this invention to provide a battery structure. The first glue frame extends to the top surface of the spacer layer and forms a protruding part, the active material layer which exposed from the spacer layer and/or the current collector layer which exposed from the active material layer are/is covered. So as to prevent that lithium ions deposit on the exposed active material layer and/or the current collector layer.

It is another objection of this invention to provide a battery structure. The first glue frame covers the area of the second material layer which correspond to the first active material so as to maintain the A/C ratio of lithium battery and reduce the probability and degree of forming lithium dendrite. This battery structure provides one of a solution to prevent inner short.

It is another objection of this invention to provide a battery structure. The protruding part of the first glue frame extends to the top surface of the spacer to enhance the structural strength of the edge of top surface of the spacer layer. This battery structure can reduce the chance of the deformation or rupture of the edge of the spacer layer. This battery structure can prevent the problem of inner short that cause by the contact of cathode and anode.

It is another objection of this invention to provide a battery structure. The spacer layer and the protruding part isolate the first active material layer from the second active material layer.

For above objections, the present invention discloses a battery structure, the battery structure comprises a first current collector layer; a first active material layer, disposed on the first current collector layer; a spacer layer, disposed on the first active material layer, the horizontal area of the spacer layer is smaller than the horizontal area of the first active material layer, so parts of a top surface of the first active material layer is exposed from the spacer layer; a first glue frame, covering the parts of the top surface of the first active material layer, the top of the first glue frame has a protruding part, the protruding part extends to the edge of a top surface of the spacer layer; a second active material layer, disposed on the spacer layer and the protruding part, isolated from the first active material layer via the spacer layer and the protruding part; and a second current collector layer, disposed on the second active material layer.

It is another objection of this invention to provide a battery structure. The protruding part of the first glue frame and the spacer layer are isolated structure that isolate the first active material layer from the second active material layer.

Further scope of applicability of the present invention will become apparent from the detailed description given hereinafter.

### BRIEF DESCRIPTION OF THE DRAWINGS

FIG.1 illustrates the sectional view of conventional flexible battery;
FIG.2 illustrates the battery structure of this present invention;
FIG.3 illustrates the battery structure of this present invention;
FIG.4 illustrates the battery structure of this present invention; and
FIG.5 illustrates the battery structure of this present invention.

### DETAILED DESCRIPTION

Referring to Fig.2, Fig.2 is an embodiment of the flexible battery. As shown in Fig.2, the lithium battery 30 mainly comprises a first current collector layer 32; a first active material layer 34 which disposed on the first current collector layer 32, the horizontal area of the first active material layer 34 is smaller than the horizontal area of the first current collector layer 32 so that parts of the first current collector layer 32 is exposed from the first active material layer 34; a spacer layer 36 which disposed on the first active material layer 34, the horizontal area of the spacer layer 36 is smaller than the horizontal area of the first active material layer 34 so that parts of top of the first active material layer 34 is exposed from the spacer layer 36; a first glue frame 38, covering the top of the first active material layer 34 exposed from the spacer layer 36, and the top of the first glue frame 38 has a protruding part 381, the protruding part 381 is extend to the edge of the top surface of the spacer layer 36; a second active material 40, disposed on the spacer layer 36 and the protruding part 381, isolating from the first active material layer 34 via the spacer layer 36 and the protruding part 381; a second current collector layer 42, disposed on the second active material layer 40; a second glue frame 46, the top of the second glue frame 46 is disposed on the second current collector 42 and encloses the peripheral of the second active material layer 40, the bottom of the second glue frame 46 is adjacent to the first glue frame 38, more specifically, the bottom of the second glue frame 46 is directly contact with the protruding part 381 of the first glue frame 38.

In above structure, the parts of first active material layer 34 which exposed from the spacer layer 36 is covered by the protruding part 381, in this embodiment, the parts of first current collector layer 32 which exposed from the first active material 34 is covered at the same time. One of the purpose of covering the exposed first active material 34 layer is to maintain the A/C ratio of lithium battery 30. A/C ratio is an important parameter of battery design, which determines the efficiency of the intercalation/deintercalation of lithium ion during electric chemical reaction. Generally, lots of lithium dendrite would produce in anode if the efficiency of the intercalation/deintercalation of lithium ion were not enough, once the lithium dendrite pierce the spacer layer 36, inner short may happen.

In general battery design, A/C ratio usually control via the chemical recipe, coating area of electrode or coating density of electrode so as to reduce the probability and degree of forming lithium dendrite. However, in addition to above solutions, the present invention uses the protruding parts 381 to control the A/C ratio, and to maintain safety and electrical performance. One of the purpose of covering the exposed first current collector layer 32 is to prevent lithium ions depositing on the first current collector 32. If the lithium ions deposit on the first current collector 32, the concentration of the lithium ion in lithium battery 30 would decrease and the lithium battery 30 would explored because of the lithium dendrite.

In addition to the above mentions, the protruding part 381 of the first glue frame 38 extends to the edge of the top surface of the spacer layer 36 that improve the structural stability of lithium battery 30. In flexible battery, the spacer layer 36 usually curved or deformation after bending several times and even cause inner short. However, the contact between the spacer layer 36 and the first active material layer 34, the spacer layer 36 and the second active material layer 40 can be effectively maintained, and the deformation of the edge of the spacer layer 36 can be prevented when the protruding part 381 extends to the edge of the top surface of the spacer layer 36 regardless in polymer spacer layer, polymer spacer layer which has special effect coating or ceramic spacer layer. The protruding part 381 effectively enhance the structural strength of the edge of the spacer layer 36 especially in ceramic spacer.

Moreover, in the above structure, the protruding part 381 of the first glue frame and the spacer layer 36 are new hybrid isolated structure that isolate the first active material layer 34 from the second active material layer 40. Furthermore, the first current collector layer 32 or the second current collector can be the conductive surface of circuit board.

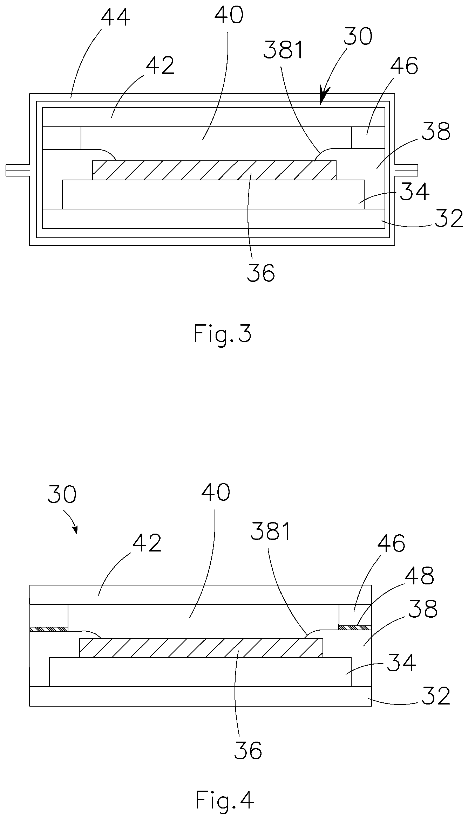

Please refer to FIG.3, which pack the lithium battery 30 in an aluminum foil bag 44, the aluminum foil bag 44 can prevent the leakage of electrolyte and block moisture and oxygen from outside environment.

Please refer to FIG.4, FIG.4 illustrates a battery structure of this present invention. The lithium battery 30 further comprises a third glue frame 48, the bottom of the second glue frame 46 is adjacent to the top of the third glue frame 48, the bottom of the third glue frame 48 is adjacent to the top of the first glue frame 38. The first glue frame 38 and the second glue frame 46 have the better heterogeneous surface adhesion than the third glue frame 48, the third glue frame 48 has the best homogeneous surface adhesion of the first glue frame 38, the second glue frame 46 and the third glue frame 48. The third glue frame 48 bonds the first glue frame 38 and the second glue frame 46 tightly.

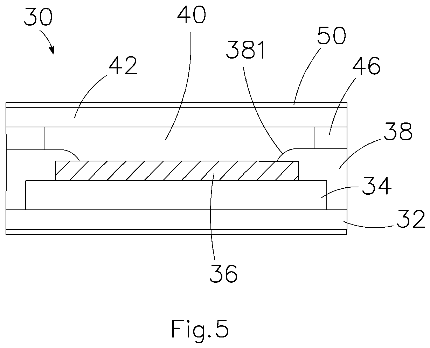

However, the first glue frame 38, the second glue frame 46 and the third glue frame 48 can be an independent structure respectively or can integrate into a single structure. Moreover, the outer surface of the first current collector layer 32 and/or the second current collector layer 42 further have/has a protection layer 50. For example, FIG.5 illustrates the battery structure, which has the protection layer 50. The protection layer 50 can prevent the contact between outside environment with the first current collector layer 32 and/or the second current collector layer 42. The protection layer 50 can protect the first current collector layer 32 and/or the second current collector layer 42 from rupture during bending the lithium battery 30.

Furthermore, the first glue frame 38, the second glue frame 46, the third glue frame 48 and the protection layer 50 can further cover the edge of the first current collector layer 32 and the second current collector layer 42. The situation of external short that cause by the contact of the first current collector layer 32 and the second current collector layer 42 during bending of the lithium battery 30 can be reduced via the insulation characteristic of the first glue frame 38, the second glue frame 46, the third glue frame 48 and the protection layer 50. The protection layer 50 could coat the edge of the first current collector layer 32 and the second current collector layer 42 in different structures depending on the battery design or the process requirements. The protection layer 50 may be single layer coating and multi-layer coating.

The materials of the first glue frame 38, the second glue frame 46, the third glue frame 48 and the protection layer 50 are selected from the electric insulation polymer such as polyimide, epoxy, acrylic resin, and silicone. The materials of the spacer layer 36 are selected from polymer material, ceramic material, glass ceramic material or glass fiber material. The first active material layer 34, the second material layer 40 and the spacer layer 36 absorb an electrolyte. The electrolyte is liquid electrolyte, gel-type electrolyte or solid state electrolyte.

In summary, the protruding part of the first glue frame covers the current collector which exposed from the active material layer. The situation of inner short that lithium dendrite formed on the current collector and puncture the spacer layer can be prevented. Moreover, the first glue frame can cover the area of the second material layer which correspond to the first active material so that the inner short can be prevented.

## Claims

1. A battery structure (30), comprising:
a first current collector layer (32);
a first active material layer (34), disposed on the first current collector layer (32);
a spacer layer (36) disposed on the first active material layer (34), wherein the horizontal area of the spacer layer (36) is smaller than the horizontal area of the first active material layer (34), so that parts of a top surface of the first active material layer (34) are exposed from the spacer layer (36);
said battery structure (30) being **characterized by** a first glue frame (38), covering the parts of the top surface of the first active material layer (34) exposed from the spacer layer (36), the top of the first glue frame (38) having a protruding part (381) extending to the edge of a top surface of the spacer layer (36);
wherein a second active material layer (40), is disposed on the spacer layer (36) and the protruding part (381), and it is isolated from the first active material layer (34) via the spacer layer (36), and the protruding part (381); wherein
a second current collector layer (42), is disposed on the second active material layer (40).

2. The battery structure of claim 1, wherein the bottom of the first glue frame (38) is disposed on the first current collector layer (32) and the first glue frame (38) encloses the peripheral of the first active material layer (34) and the spacer layer (36).

3. The battery structure of claim 1, further comprises a second glue frame (46), the top of the second glue frame (46) is adjacent to the second current collector (42) and the second glue frame (46) enclose the peripheral of the second material layer (40), the bottom of the second glue frame (46) is adjacent to the first glue frame (38).

4. The battery structure of claim 3, wherein the top of the second glue frame (46) is adjacent to the second current collector (42).

5. The battery structure of claim 1, further comprising a second glue frame (46) and a third glue frame (48), wherein the second glue frame (46) encloses the peripheral of the second current collector (42), the bottom of the second glue frame (46) is adjacent to the top of the third glue frame (48), the bottom of the third glue frame (48) is adjacent to the top of the first glue frame (38).

6. The battery structure of claim 5, wherein the first glue frame (38) and the second glue frame (46) have the better heterogeneous surface adhesion than the third glue frame (48), the third glue frame (48) has the best homogeneous surface adhesion of the first glue frame (38), the second glue frame (46).

7. The battery structure of claim 1, wherein the first current collector (32) or the second current collector (42) is a conductive surface of circuit board.

8. The battery structure of claim 1, wherein the materials of the first glue frame (38) are selected from polyimide, epoxy, acrylic resin or silicone.

9. The battery structure of claim 3, wherein the materials of the second glue frame (46) and the third glue frame (48) are selected from polyimide, epoxy, acrylic resin or silicone.

10. The battery structure of claim 5, wherein the materials of the first glue frame (38), the second glue frame (46) and the third glue frame (48) are selected from polyimide, epoxy, acrylic resin or silicone.

11. The battery structure of claim 1, wherein the materials of the spacer layer (36) are selected from polymer material, ceramic material, glass ceramic material or glass fiber material.

12. The battery structure of claim 1, wherein the first active material layer (34), the second material layer (40) and the spacer layer (36) absorb an electrolyte, the electrolyte is liquid electrolyte, gel-type electrolyte or solid state electrolyte.

13. The battery structure of claim 1, further comprises an aluminum foil pouch (44) to accommodate and enclose the battery.

14. The battery structure of claim 1, wherein the outer surface of the first current collector layer (32) and the second current collector layer (42) further have a protection layer.

15. The battery structure of claim 14, wherein the materials of protection layer (50) is selected from polyimide, epoxy, acrylic resin or silicone.

## Patentansprüche

1. Batteriestruktur (30), umfassend:
eine erste Stromabnehmerschicht (32),
eine erste aktive Materialschicht (34), die auf der ersten Stromabnehmerschicht (32) angeordnet ist,
eine Abstandhalterschicht (36), die auf der ersten aktiven Materialschicht (34) angeordnet ist, wobei der horizontale Bereich der Abstandhalterschicht (36) kleiner als der horizontale Bereich der ersten aktiven Materialschicht (34) ist, so dass Teile einer oberen Oberfläche der ersten aktiven Materialschicht (34) von der Abstandhalterschicht (36) ausgesetzt sind;
wobei die Batteriestruktur (30) **gekennzeichnet ist durch** einen ersten Kleberahmen (38), der die Teile der oberen Oberfläche der ersten aktiven Materialschicht (34), die von der Abstandhalterschicht (36) ausgesetzt sind, bedeckt; wobei die Oberseite des ersten Kleberahmens (38) einen vorspringenden Teil (381) aufweist, der sich zur Kante einer oberen Oberfläche der Abstandhalterschicht (36) erstreckt,
wobei eine zweite aktive Materialschicht (40) auf der Abstandhalterschicht (36) und dem vorspringenden Teil (381) angeordnet ist und von der ersten aktiven Materialschicht (34) über die Abstandhalterschicht (36) und dem vorspringenden Teil (381) isoliert ist;
wobei eine zweite Stromabnehmerschicht (42) auf der zweiten aktiven Materialschicht (40) angeordnet ist.

2. Batteriestruktur nach Anspruch 1, wobei die Unterseite des ersten Kleberahmens (38) auf der ersten Stromabnehmerschicht (32) angeordnet ist und der erste Kleberahmen (38) den Umfang der ersten aktiven Materialschicht (34) und der Abstandhalterschicht (36) einschließt.

3. Batteriestruktur nach Anspruch 1, weiter umfassend einen zweiten Kleberahmen (46), wobei die Oberseite des zweiten Kleberahmens (46) benachbart dem zweiten Stromabnehmer (42) ist und der zweite Kleberahmen (46) den Umfang der zweiten Materialschicht (40) einschließt, wobei die Unterseite des zweiten Kleberahmens (46) benachbart dem ersten Kleberahmen (38) ist.

4. Batteriestruktur nach Anspruch 3, wobei die Oberseite des zweiten Kleberahmens (46) benachbart dem zweiten Stromabnehmer (42) ist.

5. Batteriestruktur nach Anspruch 1, weiter umfassend einen zweiten Kleberahmen (46) und einen dritten Kleberahmen (48), wobei der zweite Kleberahmen (46) den Umfang des zweiten Stromabnehmers (42) einschließt, wobei die Unterseite des zweiten Kleberahmens (46) benachbart der Oberseite des dritten Kleberahmens (48) ist, die Unterseite des dritten Kleberahmens (48) benachbart der Oberseite des ersten Kleberahmens (38) ist.

6. Batteriestruktur nach Anspruch 5, wobei der erste Kleberahmen (38) und der zweite Kleberahmen (46) die bessere heterogene Oberflächenhaftung als der dritte Kleberahmen (48) aufweisen, der dritte Kleberahmen (48) die beste homogene Klebehaftung des ersten Kleberahmens (38) und des zweiten Kleberahmens (46) aufweist.

7. Batteriestruktur nach Anspruch 1, wobei der erste Stromabnehmer (32) oder der zweite Stromabnehmer (42) eine leitende Oberfläche einer Leiterplatte ist.

8. Batteriestruktur nach Anspruch 1, wobei die Materialien des ersten Kleberahmens (38) aus Polyimid, Epoxidharz, Acrylharz oder Silikon ausgewählt sind.

9. Batteriestruktur nach Anspruch 3, wobei die Materialien des zweiten Kleberahmens (46) und des dritten Kleberahmens (48) aus Polyimid, Epoxidharz, Acrylharz oder Silikon ausgewählt sind.

10. Batteriestruktur nach Anspruch 5, wobei die Materialien des ersten Kleberahmens (38), des zweiten Kleberahmens (46) und des dritten Kleberahmens (48) aus Polyimid, Epoxidharz, Acrylharz oder Silikon ausgewählt sind.

11. Batteriestruktur nach Anspruch 1, wobei die Materialien der Abstandhalterschicht (36) aus polymerem Material, keramischem Material, glaskeramischem Material oder Glasfasermaterial ausgewählt sind.

12. Batteriestruktur nach Anspruch 1, wobei die erste aktive Materialschicht (34), die zweite Materialschicht (40) und die Abstandhalterschicht (36) einen Elektrolyten absorbieren, der Elektrolyt ein flüssiger Elektrolyt, gelartiger Elektrolyt oder Elektrolyt in festem Zustand ist.

13. Batteriestruktur nach Anspruch 1, weiter umfassend einen Aluminiumfolienbeutel (44), um die Batterie aufzunehmen und einzuschließen.

14. Batteriestruktur nach Anspruch 1, wobei die äußere Oberfläche der ersten Stromabnehmerschicht (32) und der zweiten Stromabnehmerschicht (42) weiter eine Schutzschicht aufweisen.

15. Batteriestruktur nach Anspruch 14, wobei die Materialien der Schutzschicht (50) aus Polyimid, Epoxidharz, Acrylharz oder Silikon ausgewählt sind.

## Revendications

1. Structure de batterie (30), comprenant :
une première couche de collecteur de courant (32),
une première couche de matériau actif (34) disposée sur la première couche de collecteur de courant (32),
une couche d'espacement (36) disposée sur la première couche de matériau actif (34), la surface horizontale de la couche d'espacement (36) étant plus petite que la surface horizontale de la première couche de matériau actif (34), de telle sorte que des parties d'une surface supérieure de la première couche de matériau actif (34) sont exposées à partir de la couche d'espacement (36) ;
ladite structure de batterie (30) étant **caractérisée par** un premier cadre adhésif (38), recouvrant les parties de la surface supérieure de la première couche de matériau actif (34) exposées à partir de la couche d'espacement (36), la partie supérieure du premier cadre adhésif (38) ayant une partie en saillie (381) s'étendant jusqu'au bord d'une surface supérieure de la couche d'espacement (36) ;
une seconde couche de matériau actif (40) étant disposée sur la couche d'espacement (36) et la partie en saillie (381), et étant isolée de la première couche de matériau actif (34) par l'intermédiaire de la couche d'espacement (36), et de la partie en saillie (381) ;
une seconde couche de collecteur de courant (42) étant disposée sur la seconde couche de matériau actif (40) .

2. Structure de batterie selon la revendication 1, dans laquelle la partie inférieure du premier cadre adhésif (38) est disposée sur la première couche de collecteur de courant (32) et le premier cadre adhésif (38) entoure la périphérie de la première couche de matériau actif (34) et de la couche d'espacement (36).

3. Structure de batterie selon la revendication 1, comprenant en outre un deuxième cadre adhésif (46), la partie supérieure du deuxième cadre adhésif (46) étant adjacente au second collecteur de courant (42), et le deuxième cadre adhésif (46) entourant la périphérie de la seconde couche de matériau (40), la partie inférieure du deuxième cadre adhésif (46) étant adjacente au premier cadre adhésif (38).

4. Structure de batterie selon la revendication 3, dans laquelle la partie supérieure du deuxième cadre adhésif (46) est adjacente au second collecteur de courant (42).

5. Structure de batterie selon la revendication 1, comprenant en outre un deuxième cadre adhésif (46) et un troisième cadre adhésif (48), le deuxième cadre adhésif (46) entourant la périphérie du second collecteur de courant (42), la partie inférieure du deuxième cadre adhésif (46) étant adjacente à la partie supérieure du troisième cadre adhésif (48), la partie inférieure du troisième cadre adhésif (48) étant adjacente à la partie supérieure du premier cadre adhésif (38).

6. Structure de batterie selon la revendication 5, dans laquelle le premier cadre adhésif (38) et le deuxième cadre adhésif (46) ont une meilleure adhérence sur surface hétérogène que le troisième cadre adhésif (48), le troisième cadre adhésif (48) a la meilleure adhérence sur surface homogène par rapport au premier cadre adhésif (38) et au deuxième cadre adhésif (46).

7. Structure de batterie selon la revendication 1, dans laquelle le premier collecteur de courant (32) ou le second collecteur de courant (42) est une surface conductrice de carte de circuit.

8. Structure de batterie selon la revendication 1, dans laquelle les matériaux du premier cadre adhésif (38) sont choisis parmi un polyimide, un époxy, une résine acrylique ou un silicone.

9. Structure de batterie selon la revendication 3, dans laquelle les matériaux du deuxième cadre adhésif (46) et du troisième cadre adhésif (48) sont choisis parmi un polyimide, un époxy, une résine acrylique ou un silicone.

10. Structure de batterie selon la revendication 5, dans laquelle les matériaux du premier cadre adhésif (38), du deuxième cadre adhésif (46) et du troisième cadre adhésif (48) sont choisis parmi un polyimide, un époxy, une résine acrylique ou un silicone.

11. Structure de batterie selon la revendication 1, dans laquelle les matériaux de la couche d'espacement (36) sont choisis parmi un matériau polymère, un matériau céramique, un matériau vitrocéramique ou un matériau fibre de verre.

12. Structure de batterie selon la revendication 1, dans laquelle la première couche de matériau actif (34), la seconde couche de matériau actif (40) et la couche d'espacement (36) absorbent un électrolyte, l'électrolyte étant un électrolyte liquide, un électrolyte de type gel ou un électrolyte à l'état solide.

13. Structure de batterie selon la revendication 1, comprenant en outre un sachet en papier aluminium (44) pour recevoir et renfermer la batterie.

14. Structure de batterie selon la revendication 1, dans laquelle les surfaces externes de la première couche de collecteur de courant (32) et de la seconde couche de collecteur de courant (42) comportent en outre une couche de protection.

15. Structure de batterie selon la revendication 14, dans laquelle les matériaux de la couche de protection (50) sont choisis parmi un polyimide, un époxy, une résine acrylique ou un silicone.
